# EUROPEAN PATENT APPLICATION

(11) **EP 1 906 678 A1**
(43) Date of publication of application: **02.04.2008**
(21) Application number: 06767641.1
(22) Date of filing: 29.06.2006
(51) Int. Cl.: H04N 13/00, G03B 35/18

(54) **STEREOSCOPIC IMAGE PROCESSING DEVICE AND METHOD, STEREOSCOPIC IMAGE PROCESSING PROGRAM, AND RECORDING MEDIUM HAVING THE PROGRAM RECORDED THEREIN**

(30) Priority: 29.06.2005 JP 2005189450
(71) Applicant: Sony Corporation, Minato-ku Tokyo (JP); SANYO ELECTRIC CO., LTD., Moriguchi-shi, Osaka-fu 570-8677 (JP); Sharp Kabushiki Kaisha, Osaka-shi, Osaka 545-8522 (JP); Olympus Imaging Corporation, Shibuya-ku Tokyo 151-0072 (JP)
(72) Inventor: SEKIZAWA, Hidehiko c/o SONY CORPORATION, Tokyo 141-0001 (JP); MASHITANI, Ken, Osaka 5720839 (JP); UCHIUMI, Tadashi c/o SHARP KABUSHIKI KAISHA, Osaka-shi Osaka 545-8522 (JP); YOSHIDA, Hideaki c/o OLYMPUS IMAGING CORPORATION, Tokyo 151-0072 (JP)
(74) Representative: Müller, Frithjof E.
(86) International application number: PCT/JP2006/313024
(87) International publication number: WO 2007/001056

(57) **Abstract**

The present invention is directed to a stereo image processing apparatus adapted for generating stereo images which permit, at a glance, discrimination of a suitable observation method. This stereo image processing apparatus includes an image input unit (1) for inputting plural image data constituting stereo images by the parallel method or the crossing method, and an image synthesis unit (7) for synthesizing the inputted plural image data and padding data for visually indicating whether these image data are either stereo data by the parallel method or stereo data by the crossing method in the state where corresponding areas for respective data are partitioned to output synthetic data.

## Description

### Technical Field

The present invention relates to a stereo image processing apparatus for processing stereo images and a method therefor, and further relates to a stereo image sheet on which stereo images are printed, a stereo image processing program, and a computer readable recording medium having such program recorded therein.

This Application claims priority of the Japanese Patent Application No. 2005-189450, field on June 29, 2005, the entirety of which is incorporated by reference herein.

### Related Art

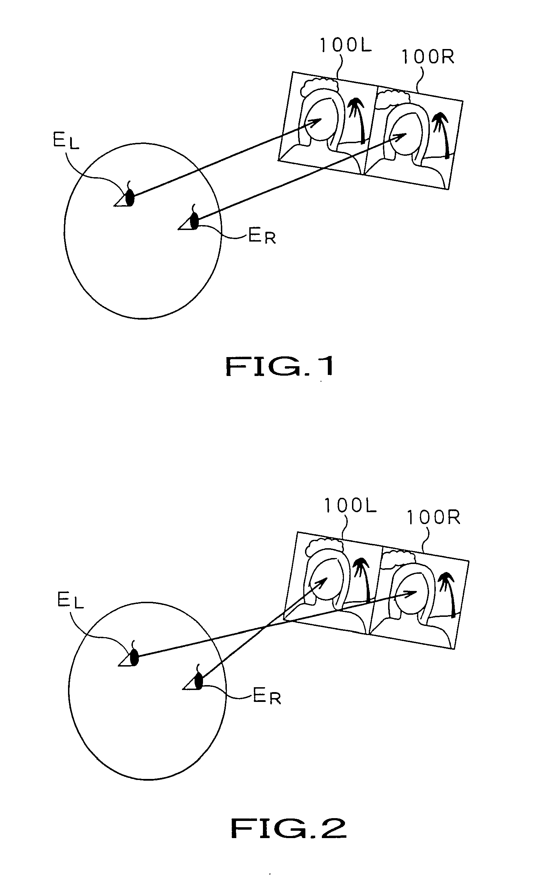

Hitherto, as a naked eye based method of permitting recognition of a plane surface image as a three-dimensional image by making use of parallax between both eyes, there are the parallel method (parallel-eyed method) and the crossing method (crossing-eyed method), etc. As shown in FIG. 1, the parallel method is a method of observing, among two left and right images having suitable parallax (hereinafter referred to as "stereo images") 100R, 100L, the image 100R of the right side by right eye E_{R} and the image 100L of the left side by the left eye E_{L}. Moreover, as shown in FIG. 2, the crossing method is a method of observing the image 100R of the right side by the left eye E_{L} and the image 100L of the left side by the right eye E_{R}.

As a method of picking up such stereo images, there are a method in which two lenses and image pick-up devices are arranged in line in left and right directions with a distance equivalent to spacing between human's eyes being maintained to simultaneously, by the parallel method or the crossing method, picking up left and right images by using theses two image pick-up systems, and the like. The technology relating to digital still camera employing such a mechanism is disclosed in the Japanese Patent Application Laid Open No. H5-30538 publication (Patent Literature 1).

Moreover, even if camera using such plural image pick-up systems is not used, a camera is moved by a distance equivalent to spacing between eyes of the human being in a horizontal direction from the position where image pick-up operation has been once performed to pick up an image of the same object for a second time from that position, or two cameras are used, etc., thereby making it possible obtain two images serving as stereo images.

In the above-described Patent Literature 1, it is described that information indicating stereo images and/or left/right discrimination information, etc. are individually recorded as header information at respective left and right image data so that left and right image data are caused to be handled as single image handling unit at the time of processing in the recording/reproducing apparatus or the transmission apparatus thus to prevent inconvenience such that one of left and right image data is erroneously erased or transmitted, etc.

### Disclosure of the Invention

### Problems to be solved by the invention

Meanwhile, it is difficult to make a judgment from appearance of stereo images as to which such stereo images are picked up by either the parallel method or the crossing method, i.e., it is suitable to attempt or perform observation by either the parallel method or the crossing method. For this reason, it is necessary for an observer to attempt both observations based on the parallel method and the crossing method to discriminate a suitable observation method by himself.

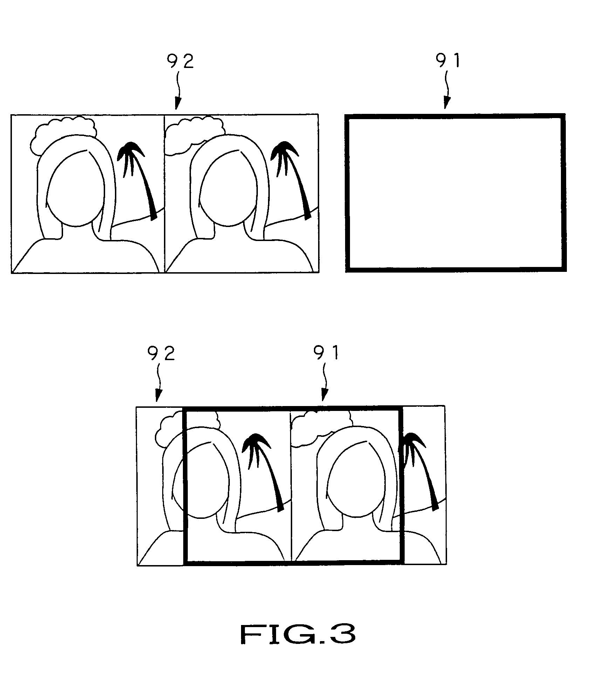

Moreover, when stereo image 92 is printed in the state caused to be in correspondence with size of printing paper 91 in printing stereo image as shown in FIG. 3, there are instances where a portion of the stereo image 92 may be missing.

The present invention has been proposed in view of circumstances as described above, and it is desirable to provide a stereo image processing apparatus, a stereo image processing method, a stereo image sheet, a stereo image processing program, and a computer readable recording medium, which can generate stereo images which permit discrimination of a suitable observation method at a glance.

One embodiment of the stereo image processing apparatus to which the present invention is applied includes: an image input unit for inputting plural image data constituting stereo images; and an image synthesis unit for synthesizing the plural image data which have been inputted by the image input means and padding data for indicating stereo information of these image data in the state where corresponding areas for respective data are partitioned to output synthetic data.

In accordance with the stereo image processing apparatus, when an observer three-dimensionally views stereo images by naked eyes, it is possible to discriminate, at a glance, a suitable observation method of stereo images on the basis of padding data of synthesized image. Accordingly, it is preferable to use, as padding data, an image which can be discriminated by visual features. Here, stereo information may information indicating whether image data is either stereo image by the parallel method or stereo image by the crossing method.

Moreover, the stereo image processing apparatus according to an embodiment of the present invention further includes an aspect ratio adjustment input unit for inputting an aspect adjustment ratio, wherein the image synthesis unit changes size of padding data to be synthesized with plural image data so that longitudinal and lateral sizes of synthetic image have the aspect adjustment ratio which has been inputted by the aspect ratio adjustment input unit.

By using such stereo image processing apparatus, it is possible to print synthetic image so that the entirety thereof is just filled within a printing paper.

Moreover, the stereo image processing apparatus according an embodiment of the present invention may further includes an encoding unit for compression-encoding image data which has been synthesized by the image synthesis unit, and a multiplexing unit for adding, as header information, stereo information for stereoscopic display control to the image data which has been compression-encoded by the encoding unit to prepare a file. Thus, it is possible to prepare file of stereo image, which permits, at a glance, discrimination of an observation method by visual features of padding data of synthetic image when an observer three-dimensionally views stereo images by naked eyes. Thus, it is possible to record such file into a recording medium to transmit it to an external equipment which permits stereoscopic display.

Plural image data may be image data for right eye and image data for left eye, or image data obtained by capturing one object from plural view points.

As described above, by using an embodiment of the present invention, it is possible to discriminate, at a glance, a suitable observation method of stereo images by visual features of padding data of synthetic image when an observer three-dimensionally views stereo images by naked eyes. In addition, it is possible to print synthetic image so that the entirety thereof is just filled within a printing paper.

Still more further features and advantages of the present invention and practical merits obtained by the present invention will become more apparent from the embodiments which will be explained below with reference to the attached drawings.

### Brief Description of the Drawings

FIG. 1 is a view showing the parallel method for permitting recognition of plane surface image as three-dimensional image.
FIG. 2 is a view showing the crossing method for permitting recognition of plane surface image as three-dimensional image.
FIG. 3 is a view for explaining problems taking place in printing stereo image.
FIG. 4 is a block diagram showing an embodiment of a stereo image processing apparatus according to the present invention.
FIG. 5 is a view showing the configuration of image file inputted to the stereo image processing apparatus shown in FIG. 4.
FIG. 6 is a view showing an example of synthetic image in the case where image is stereo image obtained by the parallel method.
FIG. 7 is a view showing an example of synthetic image in the case where image is stereo image obtained by the crossing method.
FIG. 8 is a view showing the configuration of file of stereo image outputted from the stereo image processing apparatus shown in FIG. 4.
FIG. 9 is a view showing an embodiment in which image of one object is picked up by plural digital still cameras disposed in forward and backward directions and in left and right directions.
FIG. 10 is a block diagram showing another embodiment of the stereo image processing apparatus according to the present invention.
FIG. 11 is a view showing an example of synthetic image in the case where image is stereo image by the parallel method in the stereo image processing apparatus shown in FIG. 10.
FIG. 12 is a view showing an example of synthetic image in the case where image is stereo image by the crossing method in the stereo image processing apparatus shown in FIG. 10.

### Best Mode for Carrying Out the Invention

Best mode for carrying out the present invention will now be explained with reference to the attached drawings.

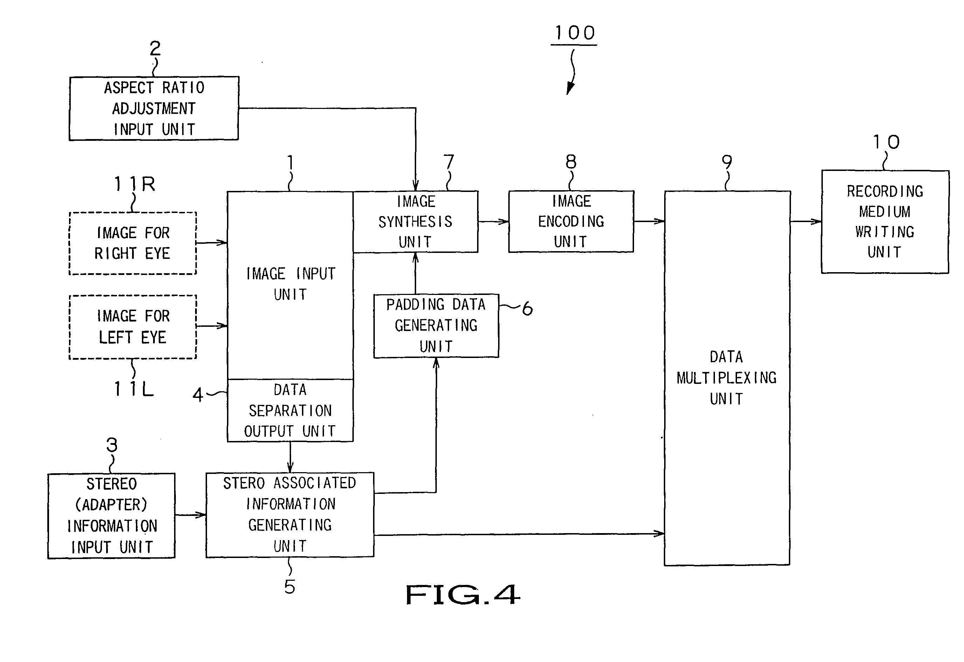

A stereo image processing apparatus 100 according to an embodiment of the present invention is applied includes, as shown in FIG. 4, an image input unit 1, an aspect ratio adjustment input unit 2, a stereo (adapter) information input unit 3, a data separation output unit 4, a stereo associated information generating unit 5, a padding data generating unit 6, an image synthesis unit 7, an image encoding unit 8, a data multiplexing unit 9, and a recording medium writing unit 10.

The image input unit 1 is means for inputting respective image files 11R, 11L for right eye and left eye in which stereo information for stereoscopic display control such as discrimination information indicating stereo image, left/right discrimination information, the number of horizontal visual points (the number of images) and horizontal shift quantity, etc. are respectively added, as header information, to image bodies for right eye and left eye.

The data separation output unit 4 is means for separating header information from respective image files 11R, 11 L for right eye and left eye which have been inputted at the image input unit 1 to output them to the stereo associated information generating unit 5.

The stereo (adapter) information unit 3 is means for inputting stereo information except for the contents included in header information of respective image files 11 R, 11 L for right eye and left eye which have been inputted, e.g., at least parallel method/crossing method discrimination information indicating whether images of the respective image files 11R, 11 L which have been inputted are either stereo images by the parallel method or stereo images by the crossing method.

The stereo associated information generating unit 5 is means for generating, on the basis of stereo information which has been inputted from the stereo (adapter) information input unit 3 and header information which have been outputted from the data separation output unit 4, stereo associated information to be outputted to the padding data generating unit 6 and the data multiplexing unit 9. In this example, the content of parallel method/crossing method discrimination information is outputted, as stereo associated information, to the padding data generating unit 6, and all contents of the stereo information which has been inputted from the stereo (adapter) information input unit 3 and the header information which have been outputted from the data separation output unit 4 are outputted, as stereo associated information, to the data multiplexing unit 9.

The padding data generating unit 6 is means for generating padding data to be synthesized with respective image bodies for right eye and left eye on the basis of stereo associated information (the content of parallel method/crossing method discrimination information) from the stereo associated information generating unit 5 to output the padding data thus generated to the image synthesis unit 7. Patting data are data for embedding empty areas formed in the case where respective image bodies for right eye and left eye are arranged in line in left and right directions within two-dimensional space having a predetermined aspect adjustment ratio. The padding data represents parallel method/crossing method discrimination information by visual features. For example, there is employed a visual representation such that human being can discriminate corresponding feature at a glance, e.g., color or pattern, etc.

The aspect ratio adjustment input unit 2 is means for inputting aspect adjustment ratio of synthetic image of stereo image and padding data which are outputted. This aspect adjustment ratio is inputted in conformity with, e.g., ratio between size in longitudinal direction and size in lateral direction of a printing paper used.

The image synthesis unit 7 is means for synthesizing respective image data for right eye and left eye which have been inputted from the image input unit 1 and padding data which has been generated by the padding data generating unit 6 to generate single image data having an aspect adjustment ratio which has been inputted from the aspect ratio adjustment input unit 2.

The image encoding unit 8 is means for compression-encoding synthetic image of stereo image-padding data which has been outputted from the image synthesis unit 7 in accordance with a predetermined system, e.g., JPEG system, etc.

The data multiplexing unit 9 is means for multiplexing synthetic image data of stereo image-padding data which has been compression-encoded by the image encoding unit 8 and stereo associated information which has been outputted from the stereo associated information generating unit 5. In this example, stereo associated information is added as header information of image file.

The recording medium writing unit 10 is means for writing image file which has been generated by the data multiplexing unit 9 into writable or rewritable non-volatile recording medium (e.g., EEPROM, etc.).

Then, the operation of the stereo image processing apparatus 100 will be explained.

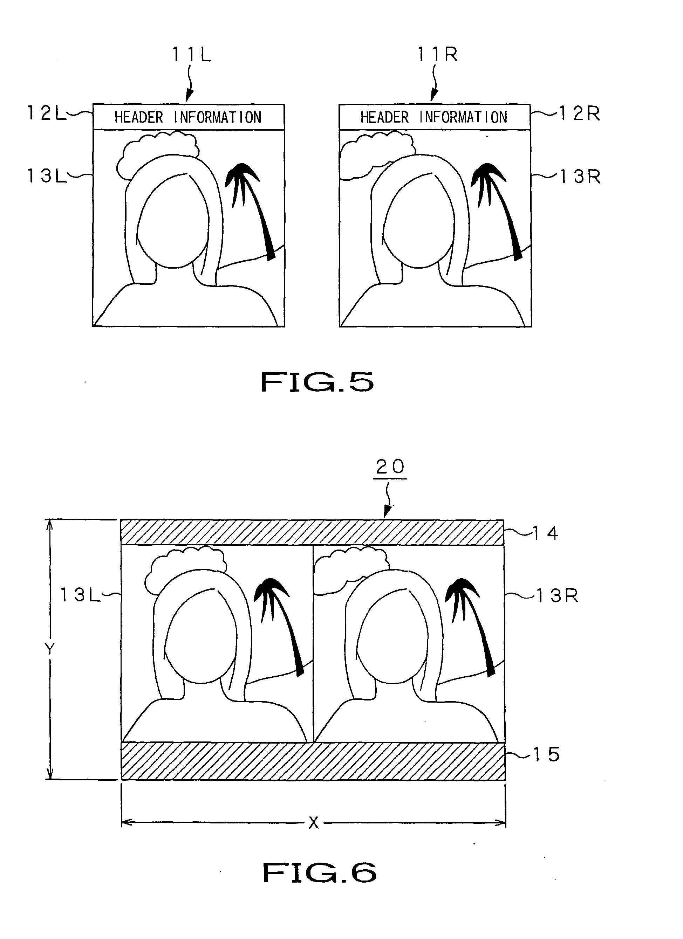

Let consider the case where image files 11R, 11L in which stereo information for stereoscopic display control such as discrimination information indicating stereo image, left/right discrimination information, the number of horizontal view points (the number of images) and/or horizontal shift quantity, etc. are respectively added to image bodies 13R, 13L as header information 12R, 12L are inputted as image files 11 R, 11 L for right eye and left eye as shown in FIG. 5. In this case, before input of image file, parallel method/crossing method discrimination information indicating whether an image file inputted from now on is either stereo image by the parallel method or stereo image by the crossing method is inputted from the stereo (adapter) information input unit 3 to set it at the stereo associated information generating unit 5. On the other hand, aspect adjustment ratio caused to be in conformity with ratio between size in longitudinal direction and size in lateral direction of printing paper used is inputted from the aspect ratio adjustment input unit 2 to set it as aspect adjustment ratio for synthesis of image at the image synthesis unit 7.

After setting operations at the stereo associated information generating unit 5 and the image synthesis unit 7 have been completed, respective image files 11R, 11L for right eye and left eye are inputted at the image input unit 1 to transfer image bodies 13R, 13L at the respective image files 11 R, 11 L to the image synthesis unit 7, and to separate and extract, at the data separation output unit 4, header information 12R, 12L of the respective image files 11R, 11L to output them to the stereo associated information generating unit 5.

When the stereo associated information generating unit 5 acquires the header information 12R, 12L of the respective image files 11R, 11L from the data separation output unit 4, it generates stereo associated information to be outputted to the padding data generating unit 6 and the data multiplexing unit 9 from the header information 12R, 12L and stereo information (at least parallel method/crossing method discrimination information) which has been already set by input from the stereo (adapter) information input unit 3 to output the stereo associated information thus obtained to the respective units. Namely, the stereo associated information generating unit 5 generates stereo associated information for generation of padding data on the basis of the parallel method/crossing method discrimination information to output it to the padding data generating unit 6, and generates stereo associated information for data multiplexing from the header information 12R, 12L of the respective image files 11R, 11L and the stereo information which is set by input from the stereo (adapter) information input unit 3 to output it to the data multiplexing unit 9.

The padding data generating unit 6 generates padding data to be synthesized with image bodies 13R, 13L on the basis of stereo associated information corresponding to the parallel method/crossing method discrimination information from the stereo associated information generating unit 5. Padding data is data indicating the parallel method/crossing method discrimination information by visual features. There is employed a representation such that the human being can discriminate corresponding feature at a glance. It is to be noted that padding data does not include information relating to size.

The padding data which has been generated by the padding data generating unit 6 is sent to the image synthesis unit 7. The image synthesis unit 7 synthesizes respective image bodies 13R, 13L for right eye and left eye which have been transferred from the image input unit 1 and the padding data from the padding data generating unit 6 to generate single image data having an aspect adjustment ratio which has been set by input from the aspect ratio adjustment input unit 2.

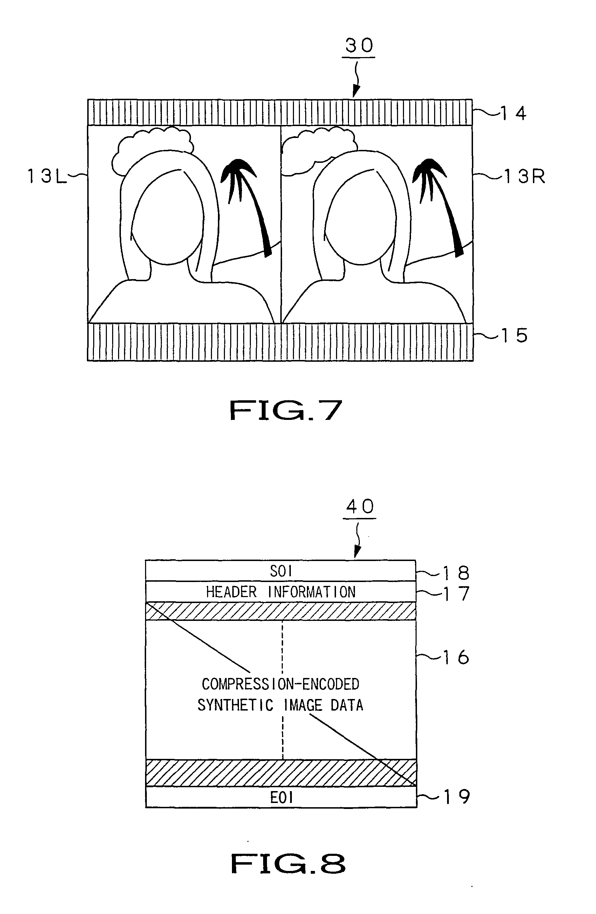

FIGS. 6 and 7 show examples of synthetic images 20, 30 which have been generated by the image synthesis unit 7, wherein FIG 6 shows synthetic image 20 in the case where respective image bodies 13R, 13L are stereo images by the parallel method and FIG. 7 shows synthetic image 30 in the case where respective image bodies 13R, 13L are stereo images by the crossing method. As stated above, in the parallel method and the crossing method, arrangement orders in horizontal direction of the respective image bodies 13R, 13L are opposite to each other.

In this example, padding data 14, 15 serving as visual parallel method/crossing method discrimination information are arranged at upper and lower portions of left and right image bodies 13R, 13L. Longitudinal size and lateral sizes of the synthetic images 20, 30 are determined by aspect adjustment ratio inputted from the aspect ratio adjustment input unit 2. Namely, in FIG. 6, length of long side of respective image bodies 13R, 13L arranged in left and right directions, e.g., length in the horizontal direction in this example is caused to be length X of long side of the synthetic image 20, and length Y of short side of the synthetic image 20, e.g., length in vertical direction is determined from the length X of the long side and the aspect adjustment ratio. Namely, the image synthesis unit 7 variably adjusts size of padding data so that longitudinal and lateral sizes of the synthetic image have aspect adjustment ratio designated in advance to synthesize the padding data thus obtained with left and right image bodies 13R, 13L.

The positions in the vertical direction of respective image bodies 13R, 13L at the synthetic images 20, 30 are caused to be peculiar to the system. In this example, determination is made such that respective image bodies 13R, 13L are arranged substantially at the intermediate position in the vertical direction. Accordingly, in this example, in the synthetic images 20, 30, areas of padding data 14, 15 are ensured at upper and lower portions of the respective image bodies 13R, 13L. It should be noted that the arrangement in which areas of padding data 14, 15 are ensured at upper and lower portions of the respective image bodies 13R, 13L in this way is only one example. An area of padding data may be ensured only at either one of upper portion and lower portion of respective image bodies 13R, 13L.

The synthetic image data obtained by the image synthesis unit 7 as stated above is compression-encoded in accordance with a predetermined system, e.g., JPEG system, etc. by the image encoding unit 8, and is sent to the data multiplexing unit 9, at which the compression-encoded synthetic image data and header information including the content of stereo associated information from the stereo associated information generating unit 5 are multiplexed. Thus, file of stereo image is prepared. The configuration of file 40 of this stereo image is shown in FIG. 8. As shown in FIG. 8, the file 40 of the stereo image includes of compression-encoded synthetic image data 16, header information 17, SOI18 indicating leading portion of the file 40, and EOI19 indicating end of the file 40, etc. The file 40 of the stereo image thus prepared is recorded into the recording medium by the recording medium writing unit 10.

In order to perform stereoscopic display of stereo images stored in the file 40 of the stereo images, a reproducing equipment capable of performing decoding/decompression of the compression-encoded synthetic image data and decoding of header information is caused to read thereinto file 40 of stereo image through network or detachably recording medium, etc. The reproducing equipment serves to separate and extract the header information 17 from the file 40 of stereo image which has been read to decode the header information 17 thus obtained, and to decode and decompress the compression-encoded synthetic image data 16 to restore original synthetic image. Further, the reproducing equipment serves to separate and extract image data for right eye and left eye except for padding data from the synthetic image to perform stereoscopic display of stereo images on the basis of decoded results of the image data for right eye and left eye and the header information 17.

Moreover, in observing, by naked eyes, stereo images stored at file 40 of stereo images, a reproducing equipment capable of decoding compression-encoded synthetic image data of stereo image file 40 is caused to read thereinto file 40 of stereo images through network or detachable recording medium, etc. Thus, as shown in FIG. 6 or FIG. 7, synthetic image 20 or synthetic image 30 of respective image bodies 13R, 13L for right eye and left eye and padding data 14, 15 is reproduced. In this instance, an observer can discriminate, at a glance, from visual features such as color and/or pattern, etc. of padding data 14, 15 displayed whether respective image bodies 13R, 13L for right eye and left eye are either stereo images by the parallel method or stereo images by the crossing method. Accordingly, it is possible to immediately attempt or perform stereoscopic observation by suitable observation method thus to exclude excess burden of the observer.

Further, since aspect ratio of synthetic image of image bodies and padding data which have been recorded in the recording medium is determined in conformity with ratio between size in longitudinal direction and size in lateral direction of printing paper used, it is possible to print synthetic image so that its entirety is just filled within the printing paper. Further, an observer can discriminate, at a glance, from visual features of padding data area on the stereo image sheet serving as the result in which the entirety of synthetic image is printed on the printing paper, whether it is suitable to observe stereo image on the stereo image sheet by the crossing method, or to observe such stereo image by the parallel method.

It is to be noted that difference between padding data by the parallel method and padding data by the crossing method may be to such a degree that it can be discriminated by the stereo image processing apparatus, but cannot be visually recognized by the human being. For example, there is conceivable a method in which padding data by the parallel method and padding data by the crossing method are caused to have a very small density difference to such a degree that it cannot be visually discriminated to discriminate, at the stereo image processing apparatus, padding data by the parallel method and padding data by the crossing method from pixel value which is corresponding density information. In this case, even if header information does not exist, it becomes possible to correctly perform reproduction by the stereo image processing apparatus. In addition, it is also possible to prepare header information on the basis of the discrimination result.

Then, another embodiment of the present invention will be explained.

While two image data for right eye and left eye are synthesized with padding data in the above-described embodiment, image data of three visual points or more (plural eyes) and padding data may be synthesized.

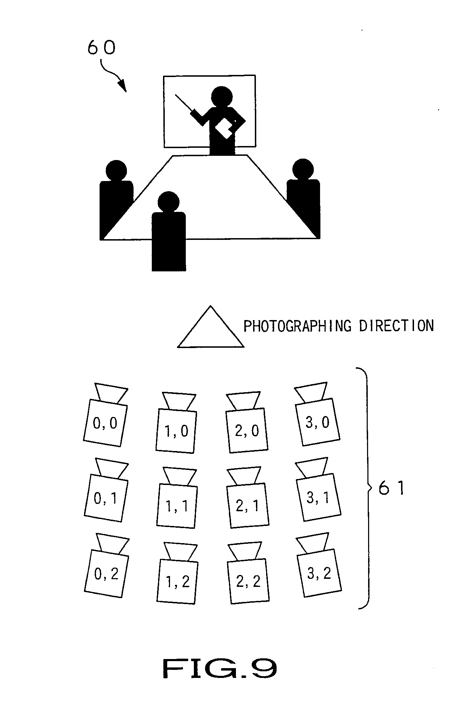

Here, e.g., as shown in FIG. 9, respective image files are obtained by adding, as header information, stereo information for stereoscopic display control to respective image data obtained by simultaneously picking up an image of one object 60 by plural digital still cameras 61(0, 0) ··· 61(3, 2) arranged in forward and backward directions and in left and right directions.

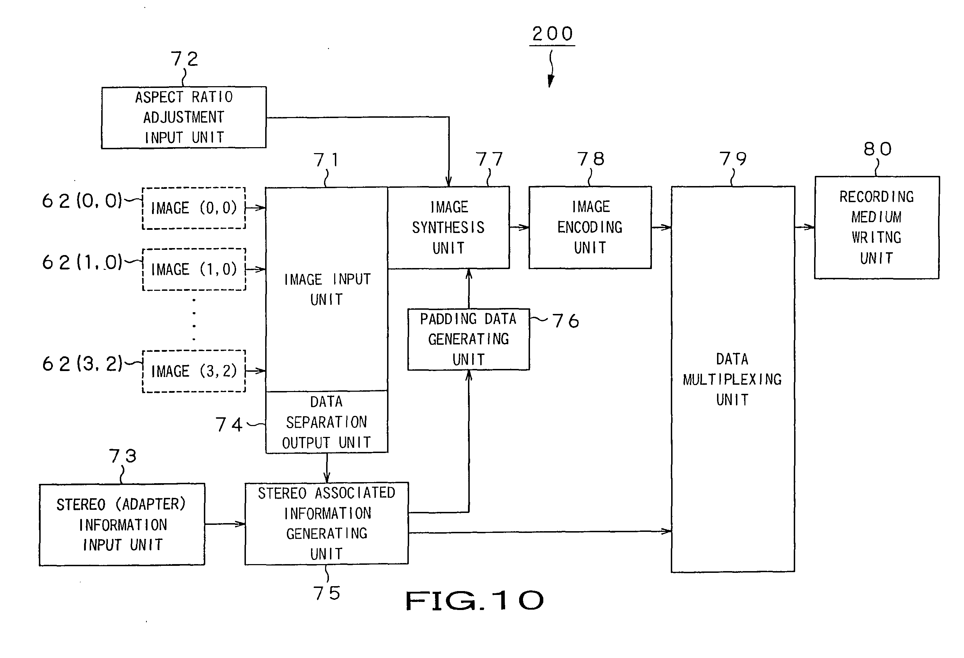

FIG. 10 is a block diagram showing the entire configuration of a stereo image processing apparatus 200 according to this embodiment.

The stereo image processing apparatus 200 includes, as shown in FIG. 10, an image input unit 71, an aspect ratio adjustment input unit 72, a stereo (adapter) information input unit 73, a data separation output unit 74, a stereo associated information generating unit 75, a padding data generating unit 76, an image synthesis unit 77, an image encoding unit 78, a data multiplexing unit 79, and a recording medium writing unit 80.

The image input unit 71 is means for inputting plural image files 62 (0, 0), 62 (0, 1), ···, 62 (3, 2) in which stereo information for stereoscopic display control such as discrimination information indicating stereo image, discrimination information of positions of view points (cameras), the number of horizontal view points (the number of images) and/or horizontal shift quantity, etc. are added, as header information, to respective image bodies obtained by simultaneously performing image pick-up operations by plural digital still cameras 61 (0, 0) ··· 61 (3, 2).

The data separation output unit 74 is means for separating header information from plural image files 62 (0, 0), 62 (0, 1), ···, 62 (3, 2) which have been inputted at the image input unit 71 to output the header information thus obtained to the stereo associated information generating unit 75.

The stereo (adapter) information input unit 73 is means for inputting stereo information except for the contents included in inputted image files 62 (0, 0), 62 (0, 1), ···, 62 (3, 2), e.g., at least parallel method/crossing method discrimination information indicating whether images of inputted respective image files 62 (0, 0), 62 (0, 1), ···, 62 (3, 2) are either stereo images by the parallel method or stereo images by the crossing method.

The stereo associated information generating unit 75 generates, on the basis of stereo information which has been inputted from the stereo (adapter) information input unit 73 and header information which have been outputted from the data separation output unit 74, stereo associated information to be outputted to the padding data generating unit 76 and the data multiplexing unit 79. Here, the content of the parallel method/crossing method discrimination information is outputted, as stereo associated information, to the padding data generating unit 76, and all contents of stereo information which has been inputted from the stereo (adapter) information input unit 73 and header information which have been outputted from the data separation output unit 74 are outputted, as stereo associated information, to the data multiplexing unit 79.

The padding data generating unit 76 generates padding data to be synthesized with plural image bodies on the basis of stereo associated information (the content of parallel method/crossing method discrimination information) from the stereo associated information generating unit 75 to output it to the image synthesis unit 77.

The aspect ratio adjustment input unit 72 is means for inputting aspect adjustment ratio of synthetic image of stereo image and padding data which are to be outputted. This aspect adjustment ratio is inputted in conformity with, e.g., ratio between longitudinal size and lateral size of printing paper used.

The image synthesis unit 77 is means for synthesizing plural image data which have been inputted from the image input unit 71 and padding data which has been generated by the padding data generating unit 76 to generate single image data having aspect adjustment ratio which has been inputted from the aspect ratio adjustment input unit 72.

The image encoding unit 78 is means for compression-encoding image data which has been synthesized at the image synthesis unit 77 in accordance with a predetermined system, e.g., JPEG system, etc.

The data multiplexing unit 79 is means for multiplexing image data which has been compression-encoded by the image encoding unit 78 and stereo associated information which has been outputted from the stereo associated information generating unit 75. Here, stereo associated information is added as header information of image file.

The recording medium writing unit 80 is means for writing image file which has been generated by the data multiplexing unit 79 into writable or rewritable non-volatile recording medium (e.g., EEPROM, etc.).

Then, the operation of the stereo image processing apparatus 200 will be explained.

Let consider the case where respective image files for plural eyes in which stereo information for stereoscopic display control, etc. such as discrimination information indicating stereo image, discrimination information of positions of visual points (cameras), the number of horizontal view points (the number of images) and/or horizontal shift quantity, etc. are added as header information are respectively inputted as plural image files 62 (0, 0), 62 (0, 1), ···, 62 (3, 2). In this case, before input of image file, parallel method/crossing method discrimination information indicating whether image file to be inputted from now on is either stereo image by the parallel method or stereo image by the crossing method is inputted from the stereo (adapter) information input unit 73 to set it at the stereo associated information generating unit 5. On the other hand, aspect adjustment ratio caused to be in conformity with ratio between size in longitudinal direction and size in lateral direction of a printing paper used is inputted from the aspect ratio adjustment input unit 72 to set it as aspect adjustment ratio of synthesis of image at the image synthesis unit 77.

After setting operations at the stereo associated information generating unit 75 and the image synthesis unit 77 are completed, plural image files 62 (0, 0), 62 (0, 1), ···, 62 (3, 2) are inputted at the image input unit 71 to transfer image bodies at the respective image files 62 (0, 0), 62 (0, 1), ···, 62 (3, 2) to the image synthesis unit 77, and to separate and extract header information at the data separation output unit 74 to output them to the stereo associated information generating unit 75.

When the stereo associated information generating unit 75 acquires header information of respective image files 62 (0, 0), 62 (0, 1), ···, 62 (3, 2) from the data separation output unit 74, it generates stereo associated information to be outputted to the padding data generating unit 76 and the data multiplexing unit 79 from these header information and stereo information (at least parallel method/crossing method discrimination information) which has been already set by input from the stereo (adapter) information input unit 73 to output it to respective units. Namely, the stereo associated information generating unit 75 generates stereo associated information for generation of padding data on the basis of parallel method/crossing method discrimination information to output it to the padding data generating unit 76, and generates stereo associated information for data multiplexing from stereo information which is set by the contents of header information of respective image files and input from the stereo (adapter) information input unit 73 to output it to the data multiplexing unit 79.

The padding data generating unit 76 generates padding data to be synthesized with plural image bodies on the basis of stereo associated information corresponding to the parallel method/crossing method discrimination information from the stereo associated information generating unit 75. The padding data represents the parallel method/crossing method discrimination information by visual features. For example, there is employed a representation such that human being can discriminate, at a glance, corresponding feature, e.g., color or pattern, etc. It is to be noted that padding data does not include information relating to size.

The padding data which has been generated by the padding data generating unit 76 is sent to the image synthesis unit 77. The image synthesis unit 77 synthesizes plural image bodies which have been transferred from the image input unit 71 and padding data from the padding data generating unit 76 to generate single image data having aspect adjustment ratio which has been set by input from the aspect ratio adjustment input unit 72.

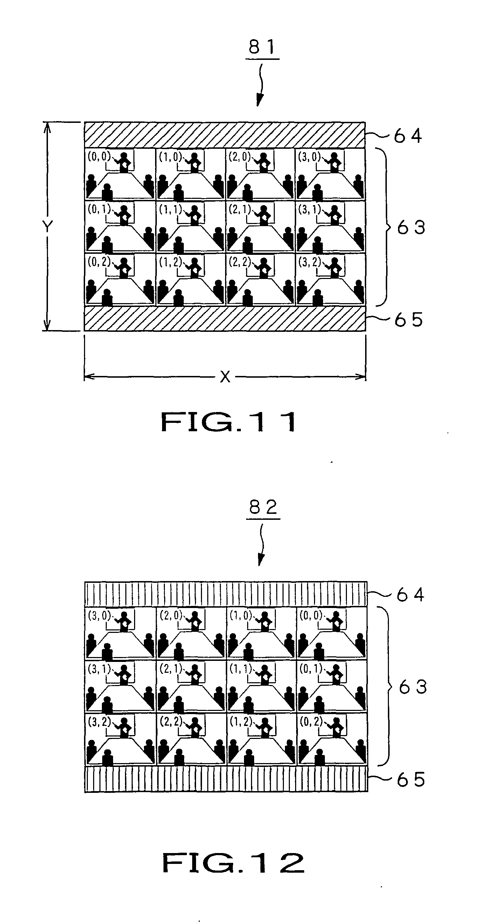

FIGS. 11 and 12 show examples of synthetic images 81, 82 which have been generated by the image synthesis unit 77, wherein FIG. 11 shows synthetic image 81 in the case where respective image bodies 63 (0, 0), 63 (0, 1), ---, 63 (3, 2) are stereo images by the parallel method and FIG. 12 shows synthetic image 82 in the case where respective image bodies 63 (0, 0), 63 (0, 1), ···, 63 (3, 2) are stereo images by the crossing method. In a manner as stated above, in the parallelism and the crossing method, arrangement orders in a horizontal direction of the respective image bodies 63 (0, 0), 63 (0, 1), ···, 63 (3, 2) are opposite to each other. It should be noted that the positional relationships in upper and lower directions are the same.

In this example, padding data 64, 65 are arranged at the upper and lower portions of respective image bodies 63 (0, 0), 63 (0, 1), ···, 63 (3, 2). The respective image bodies 63 (0, 0), 63 (0, 1), ···, 63 (3, 2) are arranged in the integrated state so that ends in horizontal direction and ends in vertical direction are in contact with each other. The longitudinal and lateral sizes of the synthetic images 81, 82 are determined in accordance with aspect adjustment ratio which has been inputted from the aspect ratio adjustment input unit 72. In concrete terms, in FIG. 11, length of long side of the integrated image body 63, e.g., the length in horizontal direction in this example is caused to be length X of long side of the synthetic image 81 to further determine length Y of short side of synthetic image 81, e.g., the length in vertical direction in this example from the length X of the long side and the aspect adjustment ratio. Namely, the image synthesis unit 77 variably adjusts size of padding data so that longitudinal and lateral sizes of the synthetic image 81 have aspect adjustment ratio designated in advance to synthesize the padding data thus obtained with the integrated image body 63.

The positions in the vertical direction of the integrated image body 63 in the synthetic images 81 or 82 are caused to be peculiar to the system. In this example, determination is made such that the integrated image body 63 is placed substantially at intermediate position in the vertical direction. Accordingly, in this example, in the synthetic images 81, 82, areas of padding data 64, 65 are ensured at upper and lower portions of the integrated image body 63. It should be noted that arrangement in which areas of padding data 64, 65 are ensured at upper and lower portions of the image body 63 integrated in this way is only one example. An area of padding data may be ensured only at one of upper and lower portions of the integrated image body 63.

The synthetic image data obtained by the image synthesis unit 77 as described above is compression-encoded in accordance with a predetermined system, e.g., JPEG system, etc. by the image encoding unit 78, and is sent to the data multiplexing unit 79, at which the compression-encoded synthetic image data and header information including the content of stereo associated information from the stereo associated information generating unit 75 are multiplexed. Thus, file of the stereo image is prepared. The file of the prepared stereo image is recorded into the recording medium by the recording medium writing unit 80.

In order to perform stereoscopic display of stereo images stored at files of the stereo images, a reproducing equipment capable of performing decoding/decompression of compression-encoded synthetic image data and decoding of header information is caused to read thereinto files of stereo images through network or detachable recording medium, etc. The reproducing equipment serves to separate and extract header information from files of stereo images which have been read to decode the header information thus obtained, and to decode/decompress the compression-encoded synthetic image data to restore original synthetic image. Further, the reproducing equipment serves to separate and extract plural synthetic image data except for padding data from the synthetic image to perform stereoscopic display of stereo images on the basis of decoded results of these plural image data and header information.

Moreover, in observing, by naked eyes, stereo images stored at files of stereo images, a reproducing equipment capable of decoding compression-encoded synthetic image data of stereo image file is caused to read thereinto files of stereo images through network or detachable recording medium, etc. Thus, as shown in FIG. 11 or FIG. 12, synthetic image 81 or synthetic image 82 of plural image bodies 63 (0, 0), 63 (0, 1), ···, 63 (3,2) and padding data 64, 65 is reproduced. In this instance, an observer can discriminate, at a glace, from visual features such as color and/or pattern, etc. of padding data 64, 65 displayed, whether respective image bodies 63 (0, 0), 63 (0, 1), ···, 63 (3, 2) are stereo images by the parallel method or stereo images by the crossing method. Accordingly, it is possible to immediately attempt or perform stereoscopic observation by a suitable observation method to exclude excess burden of the observer. Moreover, since aspect ratio of synthetic image of image bodies and padding data which have been recorded into the recording medium is determined in conformity with ratio between longitudinal size and lateral size of a printing paper used, e.g., enlargement/contraction of the entire synthetic image is only performed as occasion demands, thereby making it possible to print the synthetic image so that its entirety is just filled within the printing paper. Further, an observer can discriminate, at a glance, from visual features of padding data area on stereo image sheet which is the result in which the entirety of synthetic image is printed on the printing paper, whether it is sufficient to observe, by the crossing method, stereo images on the stereo image sheet, or it is sufficient to observe them by the parallel method.

Functions for stereo image processing of the stereo image processing apparatus 100 shown in the above-described embodiment may be provided as a program for allowing the computer to function.

It is to be noted that while the present invention has been described in accordance with certain preferred embodiments thereof illustrated in the accompanying drawings and described in detail, it should be understood by those ordinarily skilled in the art that the invention is not limited to the embodiments, but various modifications, alternative constructions or equivalents can be implemented without departing from the scope and spirit of the present invention as set forth by appended claims.

## Claims

1. A stereo image processing apparatus comprising:
image input means for inputting plural image data constituting stereo images; and
image synthesis means for synthesizing the plural image data which have been inputted by the image input means and padding data for indicating stereo information of these image data in the state where corresponding areas for respective data are partitioned to output synthetic data.

2. The stereo image processing apparatus according to claim 1,
wherein the stereo information is information indicating whether the image data is stereo image by the parallel method or stereo image by the crossing method.

3. The stereo image processing apparatus according to claim 1,
wherein the padding data is an image which can be discriminated by visual features.

4. The stereo image processing apparatus according to claim 1, further comprising:
aspect ratio adjustment input means for inputting aspect adjustment ratio,
wherein the image synthesis means changes size of the padding data to be synthesized with the plural image data so that longitudinal and lateral sizes of a synthetic image have aspect adjustment ratio which has been inputted by the aspect ratio adjustment input means.

5. The stereo image processing apparatus according to claim 1, further comprising:
encoding means for compression-encoding image data which has been synthesized by the image synthesis means; and
multiplexing means for adding, as header information, stereo information for stereoscopic display control to the image data which has been compression-encoded by the encoding means to prepare a file.

6. The stereo image processing apparatus according to claim 1,
wherein the plural image data are image data for right eye and left eye.

7. The stereo image processing apparatus according to claim 1,
wherein the plural image data are image data in which one object is captured from plural view points.

8. A stereo image processing method comprising:
a step of inputting, by image input means, plural image data constituting stereo images by the parallel method or the crossing method; and
a step of synthesizing, by image synthesis means, the inputted plural image data and padding data indicating whether these image data are stereo images by the parallel method or stereo images by the crossing method in the state where corresponding areas for respective data are partitioned.

9. The stereo image processing method according to claim 8,
wherein, in the synthesis step, size of the padding data to be synthesized with the plural image data is changed so that longitudinal and lateral sizes of the synthetic image have an aspect adjustment ratio designated in advance.

10. A stereo image sheet in which plural images constituting stereo images by the parallel method or the crossing method, and padding data for visually indicating whether these images are either stereo images by the parallel method or stereo images by the crossing method are arranged or assigned in the state where corresponding areas for respective data are partitioned.

11. A stereo image processing program for allowing computer to function as image input means for inputting plural image data constituting stereo images by the parallel method or the crossing method, and image synthesis means for synthesizing the plural image data which have been inputted by the image input means and padding data indicating whether these image data are either stereo images by the parallel method or stereo images by the crossing method in the state where corresponding area for respective data are partitioned to output synthetic data.

12. A computer readable recording medium wherein there is recorded structured image information including an synthetic image in which plural images constituting stereo images by the parallel method or the crossing method and padding data for visually indicating whether these images are either stereo images by the parallel method or stereo images by the crossing method are synthesized in the state where corresponding areas for respective data are partitioned.
